# EUROPEAN PATENT SPECIFICATION

(11) **EP 3 837 987 B1**
(45) Date of publication and mention of the grant of the patent: **24.08.2022**
(21) Application number: 19216490.3
(22) Date of filing: 16.12.2019
(51) Int. Cl.: A23D 9/05, A23L 3/46, A23P 10/00, B01J 2/02

(54) **PULVERIZING A SUBSTANCE COMPRISING A FAT**
PULVERISIEREN EINER SUBSTANZ MIT EINEM FETT
PULVÉRISATION D'UNE SUBSTANCE COMPRENANT UNE MATIÈRE GRASSE

(43) Date of publication of application: 23.06.2021
(73) Proprietor: Air Liquide Deutschland GmbH, 40235 Düsseldorf (DE); L'AIR LIQUIDE Société Anonyme pour l'Etude et l'Exploitation des Procédés Georges Claude, 75007 Paris (FR)
(72) Inventor: Kasten, Christine, 31363 Jüchen (DE); Angenheister de Freitas, Alexander, 41460 Neuss (DE)
(74) Representative: Keenway Patentanwälte Neumann Heine Taruttis

(56) References cited:
- WO-A2-2012/097259
- DE-A1-102006 006 618
- US-A- 4 952 224
- US-A1- 2016 353 794

## Description

The invention is directed to a device and a method for pulverizing a substance comprising a fat so as to obtain a powder, in particular by subjecting the substance to liquid nitrogen within a spraying tower.

It is known to pulverize liquid fat by spraying the liquid fat into a chamber via a nozzle. Within the chamber, the liquid fat is subjected to a stream of liquid nitrogen such that the liquid fat is frozen. Document US4952224 discloses an apparatus and a method or producing solid particles of fat for blending with dry ingredients in a mixing chamber, comprising the introduction of a fine, downwardly directed atomised liquid spray of liquid fat into the chamber upper portion while directing fine cryogenic liquid jets at it to cause rapid solidification.

After this pulverization, the obtained fat powder can be extracted from the chamber. Therefore, according to the prior art, a rotary valve is used. However, the rotary valve is likely to become clogged. Also, the obtained fat powder can clump.

It is, therefore, an object of the present invention to overcome at least in part the disadvantages known from prior art and, in particular, to provide a device and a method, by means of which a substance comprising a fat can be pulverized in a particularly reliable manner.

These objects are solved by the features of the independent claims. Dependent claims are directed to preferred embodiments of the present invention.

According to the invention a device for pulverizing a substance comprising a fat is presented. The device comprises:
- a chamber,
- a nozzle for spraying the substance into the chamber,
- a pulverizing means for pulverizing the substance sprayed into the chamber so as to obtain a powder, and
- a stirrer that adjoins the chamber such that the powder obtained within the chamber can be stirred within the stirrer.

The device can be used to pulverize a substance that comprises a fat, in particular a liquid fat. Preferably, the substance is fat, in particular liquid fat. The substance can be obtained by liquifying a solid fat, in particular by heating. Preferably, the substance is fat having a temperature above its melting point, in particular of 5 to 20 °C above the melting point. Preferably, the substance is fat having a temperature between 70 and 90 °C. In some cases the melting point can be more than 130°C. The substance preferably has a solid fat content of fractions ("SFC") suitable for spraying the substance.

The device can be used to pulverize various substances. Preferably, the device is configured for pulverizing palm fat, rapeseed oil and/or sunflower oil. Preferably, the device is configured for pulverizing a fractionated fat. The substance can be a pure fat or a mixture of different substances. The substance can be a mixture of different fats. Also, the substance can comprise, for example, an emulsifier.

Preferably, the fat is an ingredient of a food product or of a pharmaceutical. That is, the device is preferably configured for pulverizing a substance comprising a fat for a food product and/or for a pharmaceutical.

The substance is sprayed into the chamber. The chamber can be any enclosed volume. Preferably, the chamber is part of a spraying tower. The fat can be sprayed into the chamber by means of the nozzle. The nozzle is preferably arranged such that the substance can be supplied to the nozzle from outside the chamber. That is, the nozzle is arranged so as to penetrate a wall of the chamber. It is sufficient that a single nozzle is used. However, it is also possible that the device comprises multiple nozzles for spraying the substance into the chamber.

The pulverizing means is suitable for pulverizing the substance that has been sprayed into the chamber by the nozzle. By pulverizing the substance, the powder is obtained from the substance. That is, the substance is transformed into the powder. The substance can be pulverized, in particular, by freezing. The pulverizing means is preferably configured for cooling the substance sprayed into the chamber. That is, the pulverizing means is preferably configured for pulverizing the substance sprayed into the chamber by cooling, so as to obtain the powder.

Preferably, the pulverizing means comprises a plurality of pulverizing nozzles for subjecting the substance sprayed into the chamber with a coolant. The term "pulverizing nozzles" is used in order to distinguish these nozzles from other nozzles. The coolant is preferably liquid nitrogen. The pulverizing nozzles are preferably arranged in an annular manner, in particular around an axis along which the substance is sprayed into the chamber. This axis is defined along the center of a spraying cone of the substance sprayed into the chamber.

After the substance has been pulverized so as to obtain the powder, the powder can be transferred from the chamber to the stirrer. The stirrer is arranged downstream of the chamber. "Downstream" refers to the path along which the powder is supposed to be moved.

The chamber and the stirrer are separate elements. That is, the chamber and the stirrer enclose respective volumes that are, except for a passage, separated from each other by a structural element such as a wall. The passage connects the chamber and the stirrer with each other.

The stirrer adjoins the chamber. That means that the chamber and the stirrer are arranged next to each other in such a manner that the powder can be transferred from the chamber to the stirrer without having to pass any further element other than a connection between the chamber and the stirrer.

The stirrer preferably comprises a stirring chamber. The stirring chamber is an enclosed volume that is preferably closed to all sides except for a stirrer inlet and a stirrer outlet. Via the stirrer inlet the powder can be transferred from the chamber to the stirring chamber, via the stirrer outlet the powder can be extracted from the stirring chamber and thus from the device. Further, the stirrer preferably comprises a cleaning means for cleaning the stirrer. The cleaning means preferably comprises multiple cleaning nozzles, via which a cleaning medium can be introduced into the stirrer. The term "cleaning nozzles" is used in order to distinguish these nozzles from other nozzles. The cleaning medium is preferably gaseous nitrogen.

The powder can be stirred within the stirrer. That means that parts of the powder are moved with respect to each other so as to reduce inhomogenieties within the powder. Further, residues of the coolant used for pulverizing the substance can be extracted from the powder due to the stirring. Also, it was found that the powder can be stabilized due to the stirring. That means that clumping of the powder can be avoided. Therefore, a substance comprising a fat can be pulverized in a particularly reliable manner with the device.

According to a preferred embodiment of the device the stirrer is connected to the chamber such that the powder obtained within the chamber can be transferred to the stirrer without contacting an atmosphere surrounding the device.

In this embodiment the stirrer, in particular the stirring chamber, is connected to the chamber such that the powder is isolated from the atmosphere surrounding the device. That is, the powder is not subjected to the atmosphere during the transfer from the chamber to the stirrer.

It was found that this way the substance can be pulverized in a particularly reliable manner. This is believed to be due to the fact that contact with the atmosphere surrounding the device can cause clumping of the powder, in particular if the atmosphere is air.

According to a further preferred embodiment of the device the stirrer comprises a cooling installation for cooling the powder within the stirrer.

The cooling installation preferably comprises multiple cooling nozzles. By means of the cooling nozzles a coolant can be introduced into the stirrer. The term "cooling nozzles" is used in order to distinguish these nozzles from other nozzles. Preferably, a liquid coolant is used for cooling the powder within the stirrer, in particular liquid nitrogen.

Cooling the powder during stirring can stabilize the powder and prevent the powder from clumping.

According to a further preferred embodiment of the device the stirrer comprises an exhaust opening.

The substance is cooled within the chamber for pulverizing the substance. Residue coolant can be transferred with the powder into the stirrer. Therein, the residue coolant can emerge from the powder. Subsequently, the residue coolant can form a waste gas within the stirrer.

Further, a coolant can be introduced into the stirrer in order to cool the powder within the stirrer. The coolant is preferably liquid and evaporates within the stirrer. Thus, further coolant in its gaseous state is present within the stirrer as a waste gas.

The exhaust opening is preferably configured for exhausting waste gas from the stirrer. This applies to waste gas originating from the coolant used for pulverizing the substance, from cooling the powder within the stirrer and/or from any other process. Preferably, the exhaust opening is arranged at an upper side of the stirrer. Herein, the term "exhaust" is used for gases only. That is, the exhaust opening could also be referred to as an "exhaust gas opening".

Via the exhaust opening the waste gas can be exhausted from the stirrer. Thus, the waste gas can be prevented from flowing into the chamber, which could interfere with the pulverization of the substance within the chamber.

It is preferred that the chamber comprises a further exhaust opening, via which waste gas can be extracted from the chamber. Thus, residue coolant can be extracted from the chamber directly and not only via the stirrer. This can contribute to stabilizing the powder.

According to a further preferred embodiment of the device the stirrer is configured as a shaft mixer.

The shaft mixer comprises a shaft with multiple paddles attached thereto. The powder can be filled into the stirrer such that the powder surrounds the shaft. If the shaft is rotated about its axis, the paddles are moved through the powder so as to stir it. The shaft is preferably arranged horizontally, in particular perpendicular to a spraying axis along which the substance is sprayed into the chamber. Thereby, the device can be particularly compact.

The stirrer preferably comprises a cleaning means for cleaning the shaft and/or the paddles attached thereto. The cleaning means preferably comprises multiple cleaning nozzles, via which a cleaning medium can be introduced into the stirrer. The shaft and/or the paddles can be cleaned by a high pressure flow of the cleaning medium ejected from the cleaning nozzles. The term "cleaning nozzles" is used in order to distinguish these nozzles from other nozzles.

According to a further preferred embodiment of the device the stirrer comprises a first slider for opening and closing a stirrer inlet and/or a second slider for opening and closing a stirrer outlet.

Preferably, the stirrer comprises a first slider for opening and closing a stirrer inlet and a second slider for opening and closing a stirrer outlet.

With the first slider and second slider, the powder can be stirred as a batch process. That is, a first amount of the powder can be filled into the stirrer, be stirred within the stirrer and be extracted from the stirrer. Subsequently, this can be performed for further amounts of the powder. While a certain amount of the powder is stirred, the first and second sliders are closed such that no additional powder is introduced into the stirrer and no powder is extracted from the stirrer. This was found to improve the stabilization of the powder, in particular if the powder is cooled within the stirrer.

In contrast to a batch process, the stirrer can also be used in a continuous manner. Therein, powder is supplied to the stirrer and extracted from the stirrer continuously. A continuous process is easier to control. Also, a greater throughput can be achieved with a continuous process. For a continuous operation of the stirrer, the first and second sliders are preferably open all the time. With the first and second sliders it is possible to switch between a batch process and a continuous process.

It is also preferred to open and close the first and second sliders independently of each other. Thereby, the amount of powder within the stirrer can be controlled. Thus, a particularly flexible operation of the device is possible.

According to a further preferred embodiment of the device the stirrer is arranged underneath the chamber.

After the substance is pulverized within the chamber so as to form the powder, the powder can drop into the stirrer. This does not require any means for driving the powder.

Arranging the stirrer underneath the chamber further facilitates that the powder is transferred to the stirrer immediately after being formed within the chamber. That is, the stirring is not performed independently of the pulverization as a subsequent process step.

According to a further preferred embodiment of the device the stirrer comprises an auger.

The auger is preferably configured for stirring and conveying the powder. The powder can be conveyed by the auger from a stirrer inlet to a stirrer outlet, whereby the powder is stirred by the auger. Thus, the stirrer can be operated continuously. A continuous stirring effect can be obtained thereby because the stirring effect depends on the time the powder remains within the stirrer. In the present embodiment, this time depends on the speed at which the auger conveys the powder through the stirrer. If this speed is constant, the stirring effect is constant. In this embodiment a great throughput and a high quality of the powder can be achieved.

According to a further preferred embodiment of the device the stirrer is tilted such that a stirrer outlet is arranged at a higher level than a stirrer inlet.

The stirrer inlet can be arranged underneath the chamber such that the powder can be introduced into the stirrer in a particularly simple manner. However, it is not necessary that the entire stirrer is arranged underneath the chamber. Instead, due to the tilted arrangement of the stirrer, the stirrer can be arranged mainly beside the chamber. "Mainly" indicates that the stirrer is arranged beside the chamber except for the part of the stirrer that comprises the stirrer inlet. In this embodiment the device is particularly compact. For example, a packaging installation can be arranged next to the stirrer such that the packaging installation is at the same level as the chamber and the stirrer.

According to a further preferred embodiment the device further comprises a rotary valve at a stirrer outlet.

By means of the rotary valve the flow of the powder out of the stirrer can be controlled. Thereby, the interior of the stirrer, in particular of the stirring chamber, can be isolated from the atmosphere surrounding the stirrer. Thus, the powder within the stirrer is not influenced by the atmosphere surrounding the stirrer. This was found to enhance the stability of the powder.

According to a further aspect of the invention, a method for pulverizing a substance comprising a fat is presented. The method comprises:
a) spraying the substance into a chamber,
b) pulverizing the substance sprayed into the chamber in step a) so as to obtain a powder, and
c) stirring the powder obtained in step b) within a stirrer that adjoins the chamber.

The details and advantages disclosed for the device can be applied to the method, and vice versa. The described device is preferably configured for performing the method. The method is preferably performed using the described device. Step a) is preferably performed using the nozzle of the device. Step b) is preferably performed using the pulverizing means of the device. Step c) is preferably performed using the stirrer of the device.

According to a preferred embodiment of the method step c) is performed in subcooled and/or inert conditions.

Preferably, step c) is performed in subcooled and inert conditions.

Subcooled conditions can also be referred to as undercooled conditions. Inert conditions are given if an atmosphere within the stirrer is inert. Preferably, the atmosphere within the stirrer contains mainly the inert gas nitrogen.

It was found that the powder can be stabilized particularly well in subcooled and/or inert conditions.

According to a further preferred embodiment of the method step c) is performed in a continuous manner.

According to a further preferred embodiment of the method step c) is performed as a batch process.

According to a further preferred embodiment of the method in step c) mixing of the powder with solid or liquid materials is avoided.

The powder can be obtained in a particularly reliable manner due to the stirring of the powder. This advantage is already achieved if only the powder is supplied to the stirrer. It is not necessary to mix the powder with any other material. In the present embodiment such a mixing is avoided. Thus, the powder is obtained in a pure manner.

It should be noted that the individual features specified in the claims may be combined with one another in any desired technologically reasonable manner and form further embodiments of the invention. The specification, in particular taken together with the figures, explains the invention further and specifies particularly preferred embodiments of the invention. Particularly preferred variants of the invention and the technical field will now be explained in more detail with reference to the enclosed figures. It should be noted that the exemplary embodiments shown in the figures are not intended to restrict the invention. The figures are schematic and may not be to scale. The figures display:
- Fig. 1:: a schematic view of a first device for pulverizing a substance comprising a fat according to the invention,
- Fig. 2:: a schematic view of a second device for pulverizing a substance comprising a fat according to the invention, and
- Fig. 3:: a flow diagram of a method for pulverizing a substance comprising a fat according to the invention, which is applicable to the devices of Fig. 1 and 2.

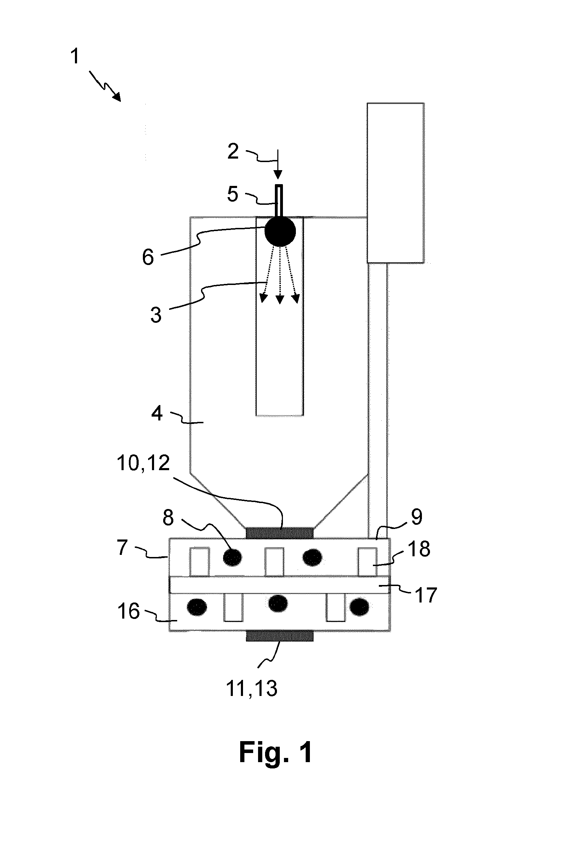

Fig. 1 shows a device 1 for pulverizing a substance 2 comprising a fat. The device 1 comprises a chamber 4 and a nozzle 5 for spraying the substance 2 into the chamber 4. Further, the device 1 comprises a pulverizing means 6 for pulverizing the substance 2 sprayed into the chamber 4 so as to obtain a powder 3. Also, the device 1 comprises a shaft mixer as a stirrer 7 that is arranged underneath the chamber 4 and that adjoins the chamber 4 such that the powder 3 obtained within the chamber 4 can be stirred within the stirrer 7. The stirrer 7 comprises a shaft 17 with paddles 18 attached thereto. The stirrer 7 further comprises a stirring chamber 16. The stirrer 7 is connected to the chamber 4 such that the powder 3 obtained within the chamber 4 can be transferred to the stirrer 7 without contacting an atmosphere surrounding the device 1. The stirrer 7 comprises a first slider 10 for opening and closing a stirrer inlet 12 and a second slider 11 for opening and closing a stirrer outlet 13. The stirrer 7 further comprises a cooling installation 8 for cooling the powder 3 within the stirrer 7. The stirrer 7 also comprises an exhaust opening 9.

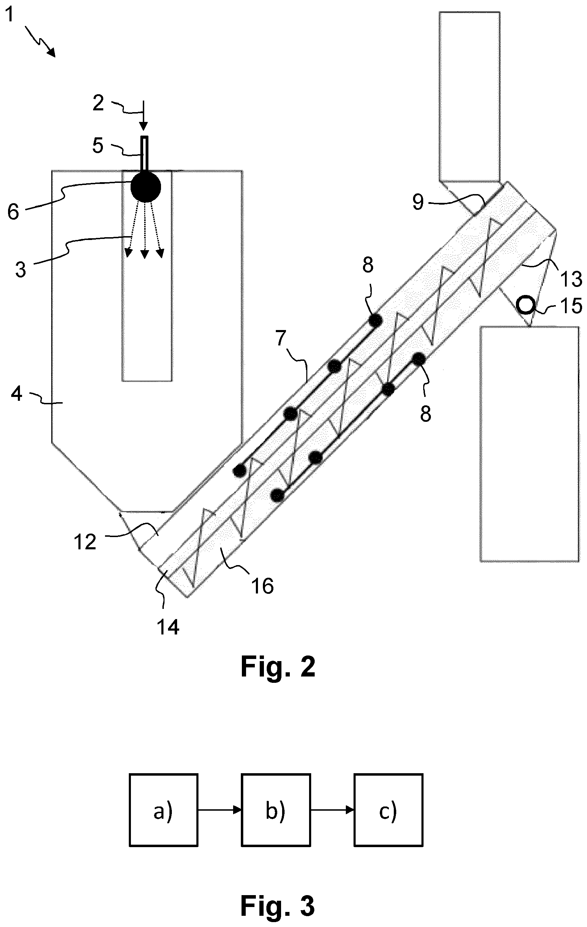

Fig. 2 shows a device 1 for pulverizing a substance 2 comprising a fat. The device 1 comprises a chamber 4 and a nozzle 5 for spraying the substance 2 into the chamber 4. Further, the device 1 comprises a pulverizing means 6 for pulverizing the substance 2 sprayed into the chamber 4 so as to obtain a powder 3. Also, the device 1 comprises a stirrer 7 that adjoins the chamber 4 such that the powder 3 obtained within the chamber 4 can be stirred within the stirrer 7. The stirrer 7 comprises a stirring chamber 16. The stirrer 7 is connected to the chamber 4 such that the powder 3 obtained within the chamber 4 can be transferred to the stirrer 7 without contacting an atmosphere surrounding the device 1. The stirrer 7 comprises a cooling installation 8 for cooling the powder 3 within the stirrer 7. The stirrer 7 also comprises an exhaust opening 9. Further, the stirrer 7 comprises an auger 14, by means of which the powder 3 can be stirred and conveyed from a stirrer inlet 12 to a stirrer outlet 13. At the stirrer outlet 13, a rotary valve 15 is arranged.

Fig. 3 shows a flow diagram of a method for pulverizing a substance 2 comprising a fat, which is applicable to the devices 1 shown Fig. 1 and 2. The method is described using the reference numerals of these figures. The method comprises:
a) spraying the substance 2 into a chamber 4,
b) pulverizing the substance 2 sprayed into the chamber 4 in step a) so as to obtain a powder 3, and
c) stirring the powder 3 obtained in step b) within a stirrer 7 that adjoins the chamber 4.

Step c) is preferably performed in subcooled and/or inert conditions. Step c) can be performed in a continuous manner or as a batch process. Preferably, in step c) mixing of the powder 3 with solid or liquid materials is avoided.

With the presented device 1 and method a substance 2 comprising a fat can be pulverized in a particularly reliable manner. This is achieved by stirring the obtained powder 3 before extraction from the device 1.

### List of reference numerals

- 1: device
- 2: substance
- 3: powder
- 4: chamber
- 5: nozzle
- 6: pulverizing means
- 7: stirrer
- 8: cooling installation
- 9: exhaust opening
- 10: first slider
- 11: second slider
- 12: stirrer inlet
- 13: stirrer outlet
- 14: auger
- 15: rotary valve
- 16: stirring chamber
- 17: shaft
- 18: paddle

## Claims

1. Device (1) for pulverizing a substance (2) comprising a fat, wherein the device (1) comprises:
- a chamber (4),
- a nozzle (5) for spraying the substance (2) into the chamber (4),
- a pulverizing means (6) for pulverizing the substance (2) sprayed into the chamber (4) so as to obtain a powder (3), and
- a stirrer (7) that adjoins the chamber (4) such that the powder (3) obtained within the chamber (4) can be stirred within the stirrer (7).

2. Device (1) according to claim 1, wherein the stirrer (7) is connected to the chamber (4) such that the powder (3) obtained within the chamber (4) can be transferred to the stirrer (7) without contacting an atmosphere surrounding the device (1).

3. Device (1) according to any of the preceding claims, wherein the stirrer (7) comprises a cooling installation (8) for cooling the powder (3) within the stirrer (7).

4. Device (1) according to any of the preceding claims, wherein the stirrer (7) comprises an exhaust opening (9).

5. Device (1) according to any of the preceding claims, wherein the stirrer (7) is configured as a shaft mixer.

6. Device (1) according to any of the preceding claims, wherein the stirrer (7) comprises a first slider (10) for opening and closing a stirrer inlet (12) and/or a second slider (11) for opening and closing a stirrer outlet (13).

7. Device (1) according to any of the preceding claims, wherein the stirrer (7) is arranged underneath the chamber (4).

8. Device (1) according to any of claims 1 to 4, wherein the stirrer (7) comprises an auger (14).

9. Device (1) according to any of claims 1 to 4 or 8, wherein the stirrer (7) is tilted such that a stirrer outlet (13) is arranged at a higher level than a stirrer inlet (12).

10. Device (1) according to any of claims 1 to 4, 8 or 9, further comprising a rotary valve (15) at a stirrer outlet (13).

11. Method for pulverizing a substance (2) comprising a fat, wherein the method comprises:
a) spraying the substance (2) into a chamber (4),
b) pulverizing the substance (2) sprayed into the chamber (4) in step a) so as to obtain a powder (3), and
c) stirring the powder (3) obtained in step b) within a stirrer (7) that adjoins the chamber (4).

12. Method according to claim 11, wherein step c) is performed in subcooled and/or inert conditions.

13. Method according to claim 11 or 12, wherein step c) is performed in a continuous manner.

14. Method according to claim 11 or 12, wherein step c) is performed as a batch process.

15. Method according to any of claims 11 to 14, wherein in step c) mixing of the powder (3) with solid or liquid materials is avoided.

## Patentansprüche

1. Vorrichtung (1) zum Pulverisieren einer Substanz (2), umfassend ein Fett, wobei die Vorrichtung (1) umfasst:
- eine Kammer (4),
- eine Düse (5) zum Sprühen der Substanz (2) in die Kammer (4),
- ein Pulverisierungsmittel (6) zum Pulverisieren der Substanz (2), die in die Kammer (4) gesprüht wird, um ein Pulver (3) zu erhalten, und
- einen Rührer (7), der an die Kammer (4) derart angrenzt, dass das Pulver (3), das in der Kammer (4) erhalten wird, innerhalb des Rührers (7) gerührt werden kann.

2. Vorrichtung (1) nach Anspruch 1, wobei der Rührer (7) mit der Kammer (4) derart verbunden ist, dass das Pulver (3), das innerhalb der Kammer (4) erhalten wird, ohne Inberührungbringen mit einer Atmosphäre, die die Vorrichtung (1) umgibt, an den Rührer (7) überführt werden kann.

3. Vorrichtung (1) nach einem der vorstehenden Ansprüche, wobei der Rührer (7) eine Kühlanlage (8) zum Kühlen des Pulvers (3) innerhalb des Rührers (7) umfasst.

4. Vorrichtung (1) nach einem der vorstehenden Ansprüche, wobei der Rührer (7) eine Austrittsöffnung (9) umfasst.

5. Vorrichtung (1) nach einem der vorstehenden Ansprüche, wobei der Rührer (7) als ein Wellenmischer konfiguriert ist.

6. Vorrichtung (1) nach einem der vorstehenden Ansprüche, wobei der Rührer (7) einen ersten Schieber (10) zum Öffnen und Schließen eines Rührereinlasses (12) und/oder einen zweiten Schieber (11) zum Öffnen und Schließen eines Rührerauslasses (13) umfasst.

7. Vorrichtung (1) nach einem der vorstehenden Ansprüche, wobei der Rührer (7) unterhalb der Kammer (4) angeordnet ist.

8. Vorrichtung (1) nach einem der Ansprüche 1 bis 4, wobei der Rührer (7) eine Schnecke (14) umfasst.

9. Vorrichtung (1) nach einem der Ansprüche 1 bis 4 oder 8, wobei der Rührer (7) derart geneigt ist, dass ein Rührerauslass (13) auf einer höheren Ebene als ein Rührereinlass (12) angeordnet ist.

10. Vorrichtung (1) nach einem der Ansprüche 1 bis 4, 8 oder 9, ferner umfassend ein Drehventil (15) an einem Rührerauslass (13).

11. Verfahren zum Pulverisieren einer Substanz (2), umfassend ein Fett, wobei das Verfahren umfasst:
a) Sprühen der Substanz (2) in eine Kammer (4),
b) Pulverisieren der Substanz (2), die in Schritt a) in die Kammer (4) gesprüht wird, um ein Pulver (3) zu erhalten, und
c) Rühren des Pulvers (3), das in Schritt b) erhalten wird, innerhalb eines Rührers (7), der an die Kammer (4) angrenzt.

12. Verfahren nach Anspruch 11, wobei Schritt c) unter unterkühlten und/oder inerten Bedingungen durchgeführt wird.

13. Verfahren nach Anspruch 11 oder 12, wobei Schritt c) auf eine fortlaufende Weise durchgeführt wird.

14. Verfahren nach Anspruch 11 oder 12, wobei Schritt c) als ein Chargenprozess durchgeführt wird.

15. Verfahren nach einem der Ansprüche 11 bis 14, wobei in Schritt c) ein Mischen des Pulvers (3) mit festen oder flüssigen Materialien vermieden wird.

## Revendications

1. Dispositif (1) de broyage d'une substance (2) comprenant une graisse, dans lequel le dispositif (1) comprend :
- une chambre (4),
- une buse (5) de pulvérisation de la substance (2) dans la chambre (4),
- un moyen de broyage (6) permettant de broyer la substance (2) pulvérisée dans la chambre (4) de manière à obtenir une poudre (3), et
- un agitateur (7) qui jouxte la chambre (4) de telle sorte que la poudre (3) obtenue à l'intérieur de la chambre (4) puisse être agitée à l'intérieur de l'agitateur (7).

2. Dispositif (1) selon la revendication 1, dans lequel l'agitateur (7) est relié à la chambre (4) de telle sorte que la poudre (3) obtenue à l'intérieur de la chambre (4) peut être transférée à l'agitateur (7) sans entrer en contact avec une atmosphère entourant le dispositif (1).

3. Dispositif (1) selon l'une quelconque des revendications précédentes, dans lequel l'agitateur (7) comprend une installation de refroidissement (8) permettant de refroidir la poudre (3) à l'intérieur de l'agitateur (7).

4. Dispositif (1) selon l'une quelconque des revendications précédentes, dans lequel l'agitateur (7) comprend une ouverture d'échappement (9).

5. Dispositif (1) selon l'une quelconque des revendications précédentes, dans lequel l'agitateur (7) est configuré comme un mouilleur mélangeur.

6. Dispositif (1) selon l'une quelconque des revendications précédentes, dans lequel l'agitateur (7) comprend un premier coulisseau (10) permettant d'ouvrir et de fermer une entrée d'agitateur (12) et/ou un second coulisseau (11) permettant d'ouvrir et de fermer une sortie d'agitateur (13).

7. Dispositif (1) selon l'une quelconque des revendications précédentes, dans lequel l'agitateur (7) est agencé en dessous de la chambre (4).

8. Dispositif (1) selon l'une quelconque des revendications 1 à 4, dans lequel l'agitateur (7) comprend une vis sans fin (14).

9. Dispositif (1) selon l'une quelconque des revendications 1 à 4 ou 8, dans lequel l'agitateur (7) est incliné de telle sorte qu'une sortie d'agitateur (13) est agencée à un niveau supérieur à une entrée d'agitateur (12).

10. Dispositif (1) selon l'une quelconque des revendications 1 à 4, 8 ou 9, comprenant en outre une vanne rotative (15) au niveau d'une sortie d'agitateur (13).

11. Procédé de pulvérisation d'une substance (2) comprenant une graisse, dans lequel le procédé comprend :
a) la pulvérisation de la substance (2) dans une chambre (4),
b) le broyage de la substance (2) pulvérisée dans la chambre (4) à l'étape a) de manière à obtenir une poudre (3), et
c) l'agitation de la poudre (3) obtenue à l'étape b) au sein d'un agitateur (7) qui jouxte la chambre (4).

12. Procédé selon la revendication 11, dans lequel l'étape c) est réalisée dans des conditions sous-refroidies et/ou inertes.

13. Procédé selon la revendication 11 ou 12, dans lequel l'étape c) est réalisée de manière continue.

14. Procédé selon la revendication 11 ou 12, dans lequel l'étape c) est réalisée comme un procédé discontinu.

15. Procédé selon l'une quelconque des revendications 11 à 14, dans lequel à l'étape c) le mélange de la poudre (3) avec des matériaux solides ou liquides est évité.
